# EUROPÄISCHE PATENTSCHRIFT

(11) **EP 1 524 422 B1**
(45) Veröffentlichungstag und Bekanntmachung des Hinweises auf die Patenterteilung: **29.08.2007**
(21) Anmeldenummer: 04405588.7
(22) Anmeldetag: 17.09.2004
(51) Int. Cl.: F02B 77/08

(54) **Vorrichtung zur Überwachung des Zylinderdrucks**
Process for monitoring cylinder pressure
Procédé pour surveiller la pression d'un cylindre

(30) Priorität: 16.10.2003 EP 03405743
(43) Veröffentlichungstag der Anmeldung: 20.04.2005
(73) Patentinhaber: Wärtsilä Schweiz AG, 8401 Winterthur (CH)
(72) Erfinder: Svimbersky, Karl, 8404 Winterthur (CH)
(74) Vertreter: Sulzer Management AG

(56) Entgegenhaltungen:
- DE-A- 3 505 210
- DE-A- 4 206 592
- DE-A- 10 018 620
- DE-A- 10 018 665
- DE-A- 10 108 051
- DE-A- 19 803 470
- DE-C- 19 826 845
- US-A- 5 827 980

## Beschreibung

Die Erfindung betrifft eine Vorrichtung zur Überwachung des Zylinderdrucks in einem Zylinder eines Dieselmotors gemäss Oberbegriff von Anspruch 1, einen Dieselmotor mit einer derartigen Vorrichtung sowie ein Verfahren zur Überwachung des Zylinderdrucks in einem Zylinder eines Dieselmotors gemäss Oberbegriff von Anspruch 5.

In Brennkraftmaschinen, insbesondere in Grossdieselmotoren und speziell in Zweitakt-Grossdieselmotoren gehört die Überwachung des Zylinderdrucks zum Stand der Technik. So wird beispielsweise in der Klassifikation von Schiffsdieselmotoren eine Überwachung des Verbrennungsspitzendrucks in den Zylindern verlangt. Um Schäden in Folge zu hoher Zylinderdrücke zu vermeiden, sind die Zylinder in herkömmlichen Grossdieselmotoren mit Sicherheitsventilen versehen, die normalerweise nach dem Ansprechen ausgewechselt werden müssen. Diese Art der Überwachung ist aufwendig und für eine kontinuierliche Überwachung ungeeignet, da oft einige Zeit vergeht, bis das Ansprechen eines Sicherheitsventils bemerkt wird, was dazu führen kann, dass nach einiger Zeit der ganze Zylinderdeckel ausgewechselt werden muss. Falls der Zylinderdruck über längere Zeit zu hoch ist, können zusätzlich Schäden an Kolbenringen und Lagern auftreten.

Um den Zylinderdruck kontinuierlich zu überwachen, werden seit einigen Jahren Dehnungsmessstreifen eingesetzt, die normalerweise an einem Zylinderdeckelbolzen angebracht sind siehe z.B. DE-A-4206592. Mittels der Dehnungsmessstreifen wird die mechanische Spannung im Zylinderdeckelbolzen erfasst, die vom Zylinderdruck abhängig ist. Dem Einsatz von Dehnungsmessstreifen zur Überwachung des Zylinderdrucks steht jedoch der vergleichsweise hohe Aufwand für die elektronische Aufbereitung des Messsignals entgegen.

Aufgabe der Erfindung ist es, eine Vorrichtung und ein Verfahren zur Überwachung des Zylinderdrucks in einem Zylinder eines Dieselmotors zur Verfügung zu stellen, sowie einen Dieselmotor mit einer derartigen Vorrichtung, die eine kontinuierliche Überwachung des Zylinderdrucks ermöglichen, für Dauereinsatz geeignet sind und die wirtschaftlich eingesetzt werden können. Insbesondere sollen die Kosten pro Zylinder für Herstellung, Montage und Betrieb einer derartigen Vorrichtung verglichen mit Lösungen aus dem Stand der Technik günstig sein.

Diese Aufgabe wird erfindungsgemäss durch die in Anspruch 1 definierte Vorrichtung, den in Anspruch 4 definierten Dieselmotor und das in Anspruch 5 definierte Verfahren gelöst.

Die erfindungsgemässe Vorrichtung zur Überwachung des Zylinderdrucks in einem Zylinder eines Dieselmotors, insbesondere eines Zweitakt-Grossdieselmotors, umfasst mindestens einen Messaufnehmer, um vom Zylinderdruck abhängige Dimensionsänderungen zu erfassen, wobei der Messaufnehmer als Wegaufnehmer und/oder Abstandssensor ausgebildet ist.

Die Vorrichtung umfasst ein längliches Messteil, das zwischen den Messstellen angeordnet ist, um eine vom Messaufnehmer zu erfassende Messdistanz zu reduzieren, wobei insbesondere ein Ende des länglichen Messteiles in Kontakt mit der einen Messstelle steht und das andere Ende des Messteiles in Längsrichtung beweglich ist und mit dem Messaufnehmer zusammenwirkt.

Vorzugsweise schliessen die zu erfassenden Dimensionsänderungen Änderungen des Abstandes zwischen zwei Messstellen ein, die an einem Zylinderblock des Dieselmotors und/oder an einem oder zwei Teilen des Zylinders und/oder an einem oder zwei Teilen vorgesehen sind, die mit dem Zylinderblock und/oder einem der Zylinderteile in Verbindung stehen. Vorzugsweise ist der Abstand zwischen den zwei Messstellen grösser als die Hälfte des Abstandes zwischen dem Zylinderblock und einem am Zylinder vorgesehen Zylinderdeckel, und insbesondere grösser als ein Viertel dieses Abstandes.

Vorzugsweise liegen die zu erfassenden Dimensionsänderungen im Bereich von 0.01 bis 2 mm, insbesondere im Bereich von 0.05 bis 1 mm oder 0.1 bis 0.5 mm.

Vorzugsweise umfassen die zu erfassenden Dimensionsänderungen Änderungen des Abstandes zwischen einem Zylinderblock des Dieselmotors und einem am Zylinder vorgesehenen Zylinderdeckel sowie Dimensionsänderungen, die im Zusammenhang mit den genannten Änderungen des Abstandes zwischen dem Zylinderblock und dem Zylinderdeckel auftreten, insbesondere Dimensionsänderungen, die proportional sind zu den genannten Änderungen des Abstandes zwischen dem Zylinderblock und dem Zylinderdeckel.

Vorzugsweise ist die Vorrichtung am Zylinderblock und/oder an einem oder mehreren Zylinderteilen angebracht, insbesondere an einem Zylindereinsatz, an einem Kühlmantel, an einem Zylinderdeckel, oder an einem Zylinderdeckelbolzen, und/oder an Teilen, die am Zylinderblock und/oder an einem oder mehreren Zylinderteilen vorgesehen sind, wobei die Vorrichtung insbesondere aussen am Zylinderblock und/oder aussen an einem oder mehreren Zylinderteilen angebracht ist.

Zusätzlich umfasst die Erfindung einen Dieselmotor, insbesondere Zweitakt-Grossdieselmotors, mit mindestens einer Vorrichtung gemäss oben stehender Beschreibung, vorzugsweise einen Dieselmotor, in dem sämtliche Zylinder jeweils mit einer derartigen Vorrichtungen versehen sind, um den Zylinderdruck in sämtlichen Zylindern zu überwachen.

Weiter umfasst die Erfindung ein Verfahren zur Überwachung des Zylinderdrucks in einem Zylinder eines Dieselmotors, insbesondere eines Zweitakt-Grossdieselmotors, in welchem Verfahren vom Zylinderdruck abhängige Dimensionsänderungen erfasst werden, wobei die Dimensionsänderungen mit einem Wegaufnehmer und/oder Abstandssensor erfasst werden. Vorzugsweise kommt zur Überwachung des Zylinderdrucks eine Vorrichtung nach oben stehender Beschreibung oder ein Dieselmotor nach oben stehender Beschreibung zur Anwendung kommt.

In einer bevorzugten Ausführungsform des Verfahrens werden die erfassten Dimensionsänderungen ausgewertet, um Werte für den Zylinderdruck und/oder die Überschreitung des zulässigen Spitzendruckes und/oder Zündaussetzer oder zu tiefe Druckwerte zu ermitteln. Vorzugsweise werden die Überschreitung des zulässigen Spitzendruckes und/oder die ermittelten Zündaussetzer oder zu tiefen Druckwerte an ein Warnsystem weitergeleitet.

Die Vorrichtung, der Dieselmotor sowie das Verfahren gemäss vorliegender Erfindung haben den Vorteil, dass Herstellung, Montage und Betrieb einer derartigen Vorrichtung verglichen mit Lösungen aus dem Stand der Technik günstig sind, da einfache Wegaufnehmer und/oder Abstandssensoren zum Einsatz kommen. Solche Wegaufnehmer und Abstandssensoren werden in grossen Stückzahlen wirtschaftlich hergestellt und sind ab Lager erhältlich. Das Ausgangssignal derartiger Wegaufnehmer und Abstandssensoren ist standardisiert und kann zur Auswertung und Weiterverarbeitung direkt einer Steuer- und/oder Recheneinheit zugeführt werden, insbesondere wenn diese über einen oder mehrere Analogeingänge verfügt. Eine aufwändige Aufbereitung des Messsignals, wie sie bei Dehnungsmesstreifen erforderlich ist, entfällt.

Die erfindungsgemässe Vorrichtung ist für Dauereinsatz geeignet und erlaubt, den Zylinderdruck kontinuierlich zu überwachen. Ein zu hoher Zylinderdruck wird von der Vorrichtung erfasst und beispielsweise an ein Schiffswarnsystem weitergeleitet, um die Last automatisch zu reduzieren. Damit kann die Vorrichtung als Ersatz für die in herkömmlichen Grossdieselmotoren üblichen Sicherheitsventile verwendet werden, um z.B. die Klassifikationsanforderungen für Schiffsdieselmotoren zu erfüllen. Weiter kann die Vorrichtung in Dieselmotoren mit elektronischer Einspritzung und elektronischer Ventilsteuerung verwendet werden, um den Spitzendruck der Verbrennung und/oder Zündaussetzer zu überwachen. Bei Überschreitung des zulässigen Spitzendruckes kann die Brennstoffmenge entsprechend reduziert werden. Die Überwachung von Zündaussetzern ist wichtig, um ein Durchbrennen eines am Dieselmotor angeschlossenen Turboladers zu verhindern, wenn sich der eingespritzte unverbrannte Brennstoff im Auspuffsammelrohr entzündet und es zu einem Auspuffsammelrohrbrand kommt.

Ein spezieller Vorteil der erfindungsgemässen Vorrichtung besteht darin, dass diese einfach am Dieselmotor montiert werden kann, und dass sich diese auch für Nachrüstungen eignet, ohne dass dafür mechanische Bearbeitungen am Dieselmotor erforderlich sind. Weiter ist vorteilhaft, dass die Vorrichtung beim Einsatz weder mit Hitze, noch mit Russ oder Verbrennungsgasen in Kontakt kommt. Während dem Betrieb ist die Vorrichtung einer stabilen Umgebungstemperatur von rund 60 °C ausgesetzt, was sich im Dauereinsatz als vorteilhaft erwiesen hat. Ein weiterer Vorteil ist die einfache Funktionskontrolle der Vorrichtung bei Stillstand des Motors. Dazu wird mittels einer Blattlehre von typisch 0.2 oder 0.3 mm Dicke ein entsprechender Spitzendruck im Zylinder simuliert.

Im Folgenden wird die Erfindung an Hand des Ausführungsbeispiels und an Hand der Zeichnung näher erläutert. Es zeigen:
- Fig. 1: einen Schnitt durch einen Zylinder und Zylinderblock eines Grossdieselmotors sowie ein Ausführungsbeispiel einer am Zylinder angebrachten Vorrichtung gemäss vorliegender Erfindung,
- Fig. 2a: das in Fig. 1 dargestellte Ausführungsbeispiel in vergrösserter Darstellung,
- Fig. 2b: eine Ausführungsvariante des in Fig. 1 dargestellte Ausführungsbeispiels mit einer anderen Anordnung des Messaufnehmers, und
- Fig. 2c: eine weitere Ausführungsvariante des in Fig. 1 dargestellte Ausführungsbeispiels, in welchem der Messaufnehmer als Wegaufnehmer ausgebildet ist.

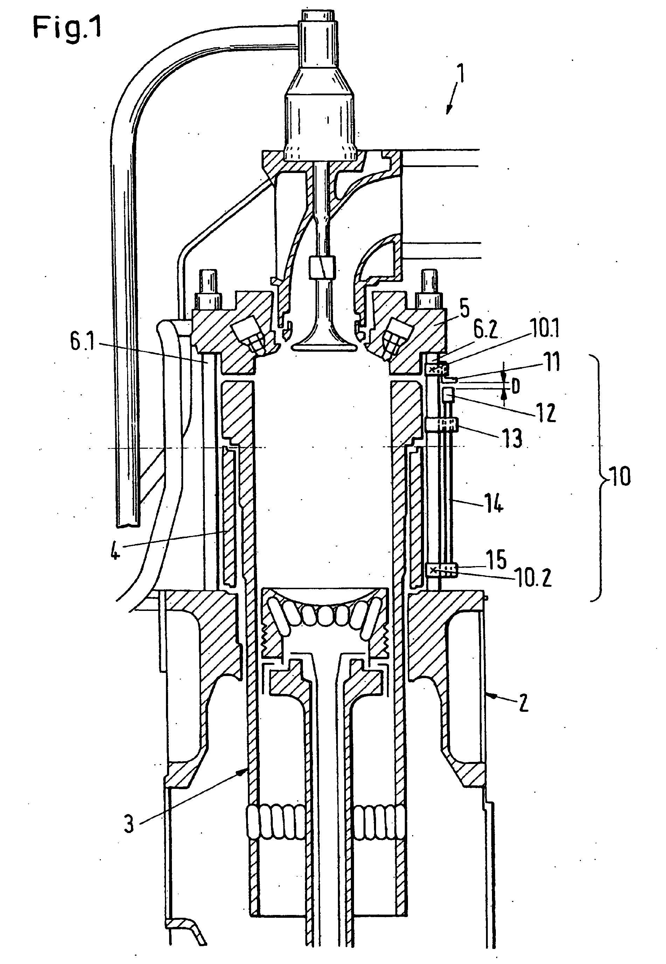

Fig. 1 zeigt einen Schnitt durch einen Zylinder 1 und einen Zylinderblock 2 eines Grossdieselmotors sowie ein Ausführungsbeispiel einer am Zylinder 1 angebrachten Vorrichtung 10 gemäss vorliegender Erfindung. Der in Fig. 1 gezeigte Zylinder 1 umfasst einen Zylindereinsatz 3, einen Kühlmantel 4, einen Zylinderdeckel 5 sowie mehrere Zylinderdeckelbolzen 6.1, 6.2, mittels welchen die erwähnten Zylinderteile am Zylinderblock 2 befestigt sind. Der Zylindereinsatz 3 sitzt in einer entsprechenden Öffnung des Zylinderblocks 2. Die Zylinderdeckelbolzen 6.1, 6.2 und die restlichen oben erwähnten Zylinderteile 3, 4, 5 sind mechanisch vorgespannt und derart ausgebildet, dass der Kühlmantel 4 auf den Zylinderblock 2, der Zylindereinsatz 3 auf den Kühlmantel und der Zylinderdeckel 5 auf den Zylindereinsatz gepresst werden. Die Vorspannung ist so gewählt, dass die Teile auch im Betrieb des Motors sicher aufeinander gepresst werden und keine Undichtigkeiten auftreten. Die durch den Verbrennungsdruck in Längsrichtung des Zylinders erzeugten Kräfte wirken der Vorspannung in den Zylinderdeckelbolzen 6.1, 6.2 entgegen. Demzufolge ändert sich im Betrieb des Motors der Abstand zwischen Zylinderblock 2 und Zylinderdeckel 5 in Abhängigkeit von dem im Zylinder erzeugten Verbrennungsdruck. Diese Abstandsänderung zwischen Zylinderblock und Zylinderdeckel liegt bei Grossdieselmotoren typischerweise im Bereich von 0.2 bis 0.4 mm.

In dem in Fig. 1 gezeigten Ausführungsbeispiel einer Vorrichtung gemäss vorliegender Erfindung ist die Vorrichtung 10 an einem Zylinderdeckelbolzen 6.2 angebracht. Vorzugsweise umfasst die Vorrichtung 10 zwei Messstellen 10.1, 10.2, von denen eine im unteren Teil des Zylinderdeckelbolzens 6.2 und eine im oberen Teil vorgesehen ist. Der Abstand zwischen den Messstellen wird zweckmässigerweise so gewählt, dass die durch den Zylinderdruck erzeugte Abstandsänderung ΔD zwischen den Messstellen im Bereich von 0.01 bis 2 mm liegen, vorzugsweise im Bereich von 0.05 bis 1 mm oder 0.1 bis 0.5 mm. Selbstverständlich kann die untere Messstelle 10.2 statt auf dem Zylinderdeckelbolzen 6.2 auch auf dem Zylinderblock 2 oder einem Zylinderteil, beispielsweise auf dem Kühlmantel 4, vorgesehen sein, und/oder die obere Messstelle 10.1 statt auf dem Zylinderdeckelbolzen auch auf einem beliebigen Zylinderteil, beispielsweise auf dem Kühlmantel 4, dem Zylindereinsatz 3 oder dem Zylinderdeckel 5. Mit Vorteil ist der Abstand zwischen den Messstellen 10.1, 10.2 in Längsrichtung des Zylinders grösser als die Hälfte des Abstandes zwischen dem Zylinderblock 2 und dem Zylinderdeckel 5 und insbesondere grösser als ein Viertel dieses Abstandes.

Vorzugsweise ist die Vorrichtung 10 mittels Klemmhalterungen 13, 15 am Zylinderdeckelbolzen 6.2 befestigt. Dies erlaubt eine einfache Montage der Vorrichtung und ermöglicht eine problemlose Nachrüstung auch bei älteren Motoren. Selbstverständlich sind auch andere Befestigungsarten möglich, beispielsweise indem die Vorrichtung 10 oder Teile der Vorrichtung am Zylinderblock 2 und/oder an einem oder zwei Zylinderteilen 3, 4, 5, 6, 6.1, 6.2 angeschraubt und/oder angeschweisst werden oder indem Teile der Vorrichtung 10 in die Zylinderteile integriert werden.

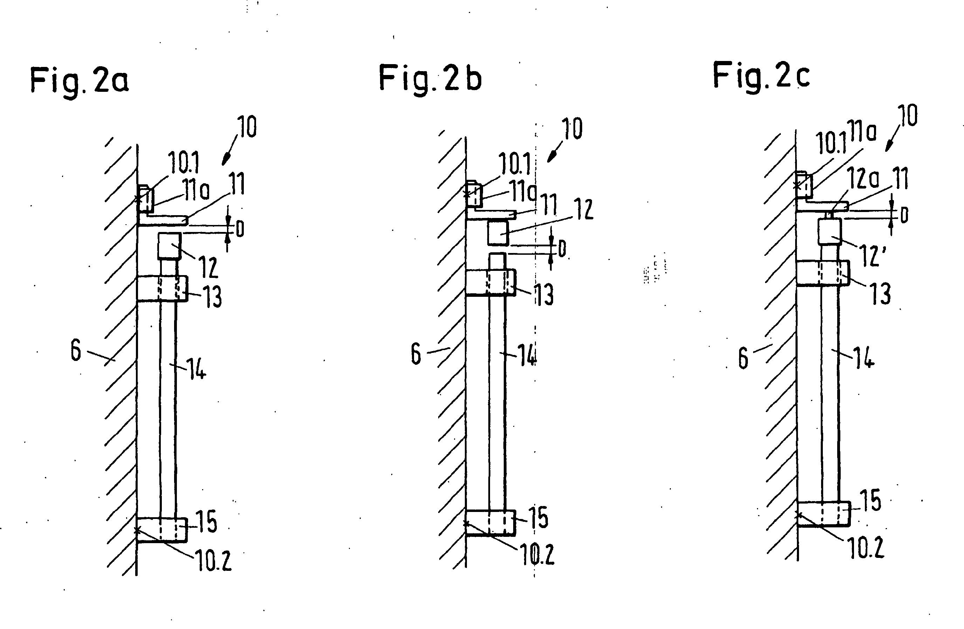

Fig. 2a zeigt das in Fig. 1 dargestellte Ausführungsbeispiel einer Vorrichtung gemäss vorliegender Erfindung in vergrösserter Darstellung. Im Ausführungsbeispiel ist an der unteren Messstelle 10.2 eine Halterung 15 vorgesehen, welche eine feste Verbindung zwischen der Messstelle 10.2 und einer in der Halterung fixierten Messstange 14 herstellt. Die Messstange 14 ist in Längsrichtung des Zylinders 1 angeordnet und überbrückt einen Teil des Abstandes, vorzugsweise den grösseren Teil des Abstandes, zwischen den zwei Messstellen 10.1, 10.2. An der oberen Messstelle 10.1 ist eine zweite Halterung 11 a vorgesehen, welche eine feste Verbindung zwischen der Messstelle 10.1 und einem mittels der Halterung fixierten Messwinkel 11 herstellt, dessen freier Schenkel vorzugsweise in der Verlängerung der Messstange 14 angeordnet ist. Im Ausführungsbeispiel ist am oberen Ende der Messstange 14 ein Abstandssensor 12 angeordnet, um den Abstand D, beziehungsweise während dem Betrieb des Motors die Abstandsänderung, zwischen dem Abstandssensor 12 und dem Messwinkel 11 zu erfassen. In der oben beschriebenen Vorrichtung ist die Abstandsänderung zwischen dem Abstandssensor 12 und dem Messwinkel 11 gleich der Abstandsänderung ΔD zwischen den zwei Messstellen 10.1, 10.2. Vorzugsweise ist in der Vorrichtung 10 eine Führung 13 vorgesehen, in welcher die Messstange 14 längsverschiebbar gelagert ist.

Fig. 2b zeigt eine Ausführungsvariante des in Fig. 1 dargestellte Ausführungsbeispiels mit einer anderen Anordnung des Messaufnehmers. Der Abstandssensor 12 ist in dieser Ausführungsvariante am Messwinkel 11 angeordnet und erfasst den Abstand D, beziehungsweise während dem Betrieb des Motors die Abstandsänderung, zwischen dem Abstandssensor 12 und dem freien Ende der Messstange 14.

Fig. 2c zeigt eine weitere Ausführungsvariante des in Fig. 1 dargestellte Ausführungsbeispiels, in welchem der Messaufnehmer 12 als Wegaufnehmer ausgebildet ist. Der Wegaufnehmer umfasst in dieser Ausführungsvariante einen Messbolzen 12a der mit dem Messwinkel 11 in Kontakt steht, um den Abstand D, beziehungsweise während dem Betrieb des Motors die Abstandsänderung, zwischen dem Messaufnehmer 12 und dem Messwinkel 11 zu erfassen.

Das oben beschriebene Ausführungsbeispiel und die oben beschriebenen Ausführungsvarianten der Vorrichtung 10 sind als beispielhaft zu betrachten. Der Fachmann erkennt sofort, dass ausgehend vom oben beschriebenen Ausführungsbeispiel eine Vielzahl weiterer Anordnungen abgeleitet werden kann, beispielsweise indem der Messaufnehmer am unteren Ende einer Messstange oder eines länglichen Messteiles angeordnet wird oder in der Mitte zwischen zwei länglichen Messteilen.

Als Messaufnehmer können vergleichsweise günstige Abstandssensoren, wie beispielsweise induktive Abstanndssensoren, oder Wegaufnehmer, wie sie z.B. in elektronischen Längenmessinstrumenten zum Einsatz kommen, verwendet werden. Der Messaufnehmer verfügt mit Vorteil über ein standartisiertes Ausgangssignal, beispielsweise ein Spannungssignal von 0 - 10 Volt oder 2 bis 10 Volt oder einen Stromsignal von 0 - 20 mA oder 4 - 20 mA. Eine allfällige Nullpunktverschiebung in Folge Alterung oder Temperaturgang des Messaufnehmers 12 und/oder der gesamten Vorrichtung 10 kann beispielsweise bei der Auswertung des Ausgangssignals berücksichtigt werden. Da der Druck im Zylinder nach jedem Verbrennungszyklus praktisch auf Null abfällt, kann die Nullpunktverschiebung dadurch berücksichtigt werden, dass z. B. die Amplitude des Ausgangssignals ausgewertet wird.

In einer bevorzugten Anwendungsform wird das Ausgangssignal des Messaufnehmers einer elektronischen Einspritz- und/oder Ventilsteuerung und/oder einem Warnsystem, beispielsweise einem Schiffswarnsystem zugeführt. Die Auswertung des Ausgangssignals erfolgt in der elektronischen Steuerung beziehungsweise im Warnsystem und umfasst beispielsweise eine Überwachung des Spitzendrucks und/oder die Überwachung von Zündaussetzern. Bei Überschreitung des erlaubten Spitzendrucks kann z.B. eine Alarmanzeige aktiviert und/oder die Brennstoffzufuhr zum entsprechenden Zylinder automatisch reduziert werden. Ein derartiges Warnsystem erfüllt in vorteilhafter Weise die Anforderungen der Schiffsmotorenklassifikation.

## Patentansprüche

1. Vorrichtung zur Überwachung des Zylinderdrucks in einem Zylinder (1) eines mit einem Zylinderblock (2) ausgestatteten Zweitakt-Grossdieselmotors, welche Vorrichtung (10) mindestens einen Messaufnehmer (12,12') umfasst, der als Wegaufnehmer und/oder Abstandssensor ausgebildet ist, um vom Zylinderdruck abhängige Dimensionsänderungen (ΔD) zu erfassen, **dadurch gekennzeichnet, dass** ausserhalb des Zylinderblocks (2) zwei Messstellen (10.1, 10.2) an einem Zylinderdeckelbolzen (6.1, 6.2) des Zweitakt-Grossdieselmotors vorgesehen sind, deren Abstandsänderungen mittels des Messaufnehmers erfassbar sind, und dass die Vorrichtung ein längliches Messteil (14) umfasst, das zwischen den Messstellen (10.1, 10.2) angeordnet ist, um eine vom Messaufnehmer (12, 12') zu erfassende Messdistanz zu reduzieren, wobei ein Ende des länglichen Messteiles (14) fest mit der einen Messstelle in Verbindung steht und das andere Ende des Messteiles (14) in Längsrichtung bezüglich des Zylinderdeckelbolzens beweglich ist und mit dem Messaufnehmer (12, 12') zusammenwirkt.

2. Vorrichtung nach Anspruch 1, wobei der Abstand zwischen den zwei Messstellen (10.1, 10.2) grösser ist als die Hälfte des Abstandes zwischen dem Zylinderblock (2) und einem am Zylinder (1) vorgesehen Zylinderdeckel (5), und insbesondere grösser als ein Viertel dieses Abstandes.

3. Vorrichtung nach einem der Ansprüche 1 oder 2, wobei die zu erfassenden Dimensionsänderungen (ΔD) im Bereich von 0.01 mm bis 2 mm liegen, insbesondere im Bereich von 0.05 mm bis 1 mm oder 0.1 mm bis 0.5 mm.

4. Zweitakt-Grossdieselmotor mit mindestens einer Vorrichtung (10) nach einem der Ansprüche 1 bis 3, insbesondere ein Zweitakt-Grossdieselmotor, in dem sämtliche Zylinder (1) jeweils mit einer Vorrichtungen nach einem der Ansprüche 1 bis 3 versehen sind, um den Zylinderdruck in sämtlichen Zylindern zu überwachen.

5. Verfahren zur Überwachung des Zylinderdrucks in einem Zylinder (1) eines mit einem Zylinderblock (2) ausgestatteten Zweitakt-Grossdieselmotors, in welchem Verfahren mittels eines Wegaufnehmers (12') und/oder Abstandssensors (12) vom Zylinderdruck abhängige Dimensionsänderungen (ΔD) erfasst werden, **dadurch gekennzeichnet, dass** ausserhalb des Zylinderblocks (2) zwei Messstellen (10.1, 10.2) an einem Zylinderdeckelbolzen (6.1, 6.2) des Zweitakt-Grossdieselmotors vorgesehen werden, deren Abstandsänderungen erfasst werden, und dass eine vom Messaufnehmer (12, 12') zu erfassende Messdistanz mittels eines länglichen Messteils (14) reduziert wird, das zwischen den Messstellen (10.1, 10.2) angeordnet ist, wobei ein Ende des länglichen Messteiles (14) fest mit der einen Messstelle in Verbindung steht und das andere Ende des Messteiles (14) in Längsrichtung bezüglich des Zylinderdeckelbolzens beweglich ist und mit dem Messaufnehmer (12, 12') zusammenwirkt.

6. Verfahren nach Anspruch 5, wobei zur Überwachung des Zylinderdrucks eine Vorrichtung (10) nach einem der Ansprüche 1 bis 3 oder ein Dieselmotor mit einer derartigen Vorrichtung zur Anwendung kommt.

7. Verfahren nach Anspruch 5 oder 6, wobei die erfassten Dimensionsänderungen (ΔD) ausgewertet werden, um Werte für den Zylinderdruck und/oder die Überschreitung des zulässigen Spitzendruckes und/oder Zündaussetzer oder zu tiefe Druckwerte zu ermitteln, und insbesondere, um die Überschreitung des zulässigen Spitzendruckes und/oder die ermittelten Zündaussetzer oder zu tiefen Druckwerte an ein Wamsystem weiterzuleiten.

## Claims

1. An apparatus for monitoring the cylinder pressure in a cylinder (1) of a large two-stroke diesel engine equipped with a cylinder block (2), said apparatus (10) including at least one measurement pickup (12, 12') which is formed as a displacement transducer and/or a distance sensor in order to detect dimensional changes (ΔD) depending on the cylinder pressure, **characterised in that** two measuring points (10.1, 10.2) are provided outside of the cylinder block (2) at a cylinder cover bolt(6.1, 6.2) of the large two-stroke diesel engine, with changes in the spacing of the measuring points being detectable by means of the measurement pickup, and **in that** the apparatus includes an elongate measuring part (14) which is arranged between the measuring points (10.1, 10.2) in order to reduce a measuring distance to be detected by the measurement pickup (12, 12'), with one end of the elongate measuring part (14) being in fixed connection with the one measuring point and with the other end of the measuring part (14) being movable in the longitudinal direction with respect to the cylinder cover bolt and cooperating with the measurement pickup (12, 12').

2. An apparatus in accordance with claim 1 wherein the distance between the two measuring points (10.1, 10.2) is greater than half of the distance between the cylinder block (2) and a cylinder cover (5) provided at the cylinder (1) and is in particular larger than a quarter of this distance.

3. An apparatus in accordance with one of the claims 1 or 2, wherein the dimensional changes (ΔD) are in the range from 0.01 mm to 2 mm, in particular in the range from 0.05 mm to 1 mm or 0.1 mm to 0.5 mm.

4. A large two-stroke diesel engine having at least one apparatus (10) in accordance with one of the claims 1 to 3, in particular a large two-stroke diesel engine in which all cylinders (1) are respectively provided with an apparatus in accordance with one of the claims 1 to 3, in order to monitor the cylinder pressure in all of the cylinders.

5. A method for monitoring the cylinder pressure in a cylinder (1) of a large two-stroke diesel engine equipped with a cylinder block (2) wherein dimensional changes (ΔD) dependent on the cylinder pressure are detected in this method by means of a displacement transducer (12') and/or a distance sensor (12), **characterised in that** two measuring points (10.1, 10.2) are provided outside of the cylinder block (2) at a cylinder cover bolt 6.1, 6.2) of the large two-stroke diesel engine, with changes of the spacing of the measuring points being detected, and **in that** a measuring distance to be detected by the measurement pickup (12, 12') is reduced by means of an elongate measuring part (14) which is arranged between the measuring points (10.1, 10.2), with one end of the elongate measuring part (14) being in fixed connection with the one measuring point and with the other end of the measuring part (14) being movable in the longitudinal direction with respect to the cylinder cover bolt and cooperating with the measurement pickup (12, 12').

6. A method in accordance with claim 5 wherein an apparatus (10) in accordance with one of the claims 1 to 3 or a diesel engine with an apparatus of this kind is used.

7. A method in accordance with claim 5 or claim 6 wherein the detected dimensional changes (ΔD) are evaluated in order to determine values for the cylinder pressure and/or the exceeding of the permitted peak pressure and/or misfiring or pressure values, which are too low and in particular in order to pass on to a warning system the exceeding of the permitted peak pressure and/or the detection of misfiring or pressure values which are too low.

## Revendications

1. Procédé pour surveiller la pression d'un cylindre (1) d'un grand moteur Diesel à deux temps muni d'un bloc-cylindres (2), ledit dispositif (10) comprenant au moins un capteur de mesure (12, 12') qui est réalisé comme capteur de déplacement et/ou capteur d'écartement pour détecter des modifications de dimensions (ΔD) dépendant de la pression de cylindre, **caractérisé en ce que** sont prévus à l'extérieur du bloc-cylindres (2) deux emplacements de mesure (10.1, 10.2) à un boulon de couvercle de cylindre (6.1, 6.2) du grand moteur Diesel à deux temps, dont les modifications d'écart peuvent être détectées par le capteur de mesure, et **en ce que** le dispositif comprend une partie de mesure oblongue (14) qui est disposée entre les emplacements de mesure (10.1, 10.2) pour réduire une distance de mesure à détecter par le capteur de mesure (12, 12'), où une extrémité de la partie de mesure oblongue (14) est reliée solidement à un emplacement de mesure, et l'autre extrémité de la partie de mesure (14) est mobile dans la direction longitudinale relativement au boulon de couvercle de cylindre et coopère avec le capteur de mesure (12, 12').

2. Dispositif selon la revendication 1, où l'écart entre les deux emplacements de mesure (10.1, 10.2) est plus grand que la moitié de l'écart entre le bloc-cylindres (2) et un couvercle de cylindre (5) prévu au cylindre (1), et en particulier plus grand qu'un quart de cet écart.

3. Dispositif selon l'une des revendications 1 ou 2, où les modifications de dimensions (ΔD) à détecter se situent dans la plage de 0,01 mm à 2 mm, en particulier dans la plage de 0,05 mm à 1 mm ou 0,1 mm à 0,5 mm.

4. Grand moteur Diesel à deux temps avec au moins un dispositif (10) selon l'une des revendications 1 à 3, en particulier un grand moteur Diesel à deux temps, dans lequel tous les cylindres (1) sont pourvus chacun d'un dispositif selon l'une des revendications 1 à 3, pour surveiller la pression dans tous les cylindres.

5. Procédé pour surveiller la pression d'un cylindre (1) d'un grand moteur Diesel à deux temps muni d'un bloc-cylindres (2), procédé dans lequel, au moyen d'un capteur de déplacement (12') et/ou d'un capteur d'écartement (12), des modifications de dimensions (ΔD) dépendant de la pression de cylindre sont détectées, **caractérisé en ce que** sont prévus à l'extérieur du bloc-cylindres (2) deux emplacements de mesure (10.1, 10.2) à un boulon de couvercle de cylindre (6.1, 6.2) du grand moteur Diesel à deux temps, dont les modifications d'écart sont détectées, et **en ce qu'**une distance de mesure à détecter par le capteur de mesure (12, 12') est réduite au moyen d'une partie de mesure oblongue (14), qui est disposée entre les emplacements de mesure (10.1, 10.2), où une extrémité de la partie de mesure oblongue (14) est reliée solidement à un emplacement de mesure, et l'autre extrémité de la partie de mesure (14) est mobile dans la direction longitudinale relativement au boulon de couvercle de cylindre et coopère avec le capteur de mesure (12, 12').

6. Procédé selon la revendication 5, dans lequel, pour surveiller la pression de cylindre, est utilisé un dispositif (10) selon l'une des revendications 1 à 3 ou un moteur Diesel avec un tel dispositif.

7. Procédé selon la revendication 5 ou 6, où les modifications de dimensions détectées (ΔD) sont évaluées pour déterminer des valeurs pour la pression de cylindre et/ou le dépassement de la pression de pointe autorisée et/ou des ratés d'allumage ou des valeurs de pression trop basses, et en particulier pour transmettre le dépassement de la pression de pointe autorisée et/ou les ratés d'allumage déterminés ou les valeurs de pression trop basses à un système d'avertissement.
